# EUROPEAN PATENT APPLICATION

(11) **EP 3 581 761 A1**
(43) Date of publication of application: **18.12.2019**
(21) Application number: 19177631.9
(22) Date of filing: 31.05.2019
(51) Int. Cl.: F01D 5/18, B21D 26/055, F01K 3/06

(54) **PROCESS OF FORMING AN AEROFOIL**

(30) Priority: 11.06.2018 GB 201809531
(71) Applicant: Rolls-Royce plc, London SW1E 6AT (GB)
(72) Inventor: Sheard, Edward, Derby, Derbyshire DE24 8BJ (GB)
(74) Representative: Rolls-Royce plc

(57) **Abstract**

A process of forming an aerofoil is provided. The process includes: providing a layered, planar pre-form; inflating and hot creep forming the pre-form to form an intermediate structure having aerofoil pressure and suction surfaces, and a front, edge-receiving portion joining front edges of the pressure and suction surfaces; providing a leading edge piece; and bonding the leading edge piece to the front, edge-receiving portion of the intermediate structure to form an aerofoil in which the leading edge piece forms an aerofoil leading edge.

## Description

The present disclosure relates to a process of forming an aerofoil.

Gas turbine engines comprise compressor and turbine arrangements having alternating stages of rotating aerofoil blades and stationary aerofoil vanes. A number of compressors are often provided which each supply high pressure air either to another downstream compressor or to a combustor. It is usual for outlet guide vanes (OGVs) to be provided aft of each compressor in order to straighten the flow from the compressor and direct it appropriately to another downstream compressor or to the combustor. Similarly, in a ducted fan gas turbine engine of the type used to power aircraft, the fan blades are typically followed in the bypass duct by a row of fan OGVs. Such outlet guide vanes may be provided in the form of stationary aerofoils.

In order to reduce engine weight, it is conventional to form these aerofoils so that they have a hollow configuration. This can be achieved by inflating them from planar pre-forms using a superplastic forming (SPF) process which can be performed subsequent to, or simultaneously with, a hot creep forming (HCF) technique to achieve the overall aerofoil shape from the planar pre-form. It is usual to cut the pre-form to define the leading and trailing edges of the aerofoil after SPF and HCF.

For example, fan OGVs can be formed from two flat plates (e.g. titanium alloy plates) that are bonded together around the edges, then heated and bent into shape while being inflated with high pressure gas to create a cavity. Subsequently, the leading and trailing edges are machined to a finished shaped.

Although slight geometric differences between OGVs formed this way can be addressed to an extent by using adaptive machining to shape the leading edge, the manufacturing process as a whole provides poor control of particularly blade inlet angle, which can vary in the range of ±2° or more. In addition, the SPF/HCF process has high capital costs, which limits the ability to make multiple vane camber standards to arrive at more optimal vane shapes.

According to a first aspect of the disclosure there is provided a process of forming an aerofoil, the process including:
providing a layered, planar pre-form;
inflating and hot creep forming the pre-form to form an intermediate structure having aerofoil pressure and suction surfaces, and a front, edge-receiving portion joining front edges of the pressure and suction surfaces;
providing a leading edge piece; and
bonding the leading edge piece to the front, edge-receiving portion of the intermediate structure to form an aerofoil in which the leading edge piece forms an aerofoil leading edge.

In this aspect, the intermediate structure from the hot creep forming and inflating may further have an aerofoil trailing edge. Another option, however, is for the intermediate structure from the hot creep forming and inflating further to have a rear, edge-receiving portion joining rear edges of the pressure and suction surfaces, and for the process to further include:
providing a trailing edge piece; and
bonding the trailing edge piece to the rear, edge-receiving portion of the intermediate structure to form an aerofoil in which the trailing edge piece forms an aerofoil trailing edge.

Indeed, according to a second aspect of the disclosure there is provided a process of forming an aerofoil, the process including:
providing a layered, planar pre-form;
inflating and hot creep forming the pre-form to form an intermediate structure having aerofoil pressure and suction surfaces, and a rear, edge-receiving portion joining rear edges of the pressure and suction surfaces;
providing a trailing edge piece; and
bonding the trailing edge piece to the rear, edge-receiving portion of the intermediate structure to form an aerofoil in which the trailing edge piece forms an aerofoil trailing edge

In this aspect, the intermediate structure from the hot creep forming and inflating may further have an aerofoil leading edge.

Manufacture OGVs using the existing HCF process, but without adding machined leading edges. The OGVs formed this way would be slightly shorter (less chord) to allow for the addition of the LE piece

Advantageously, the processes of these aspects enables an approach in which the aerofoil pressure and suction surfaces can still be formed by SPF/HCF, but the leading edge piece and/or the trailing edge piece can be manufactured separately to a more accurate standard than is possible with SPF/HCF, thereby improving conformance. When applied for example to a fan OGV, this can improve performance of the engine by reducing bypass duct losses and reducing fuel burn. It also promotes design flexibility by enabling a greater variation in vane geometry around the circumference so that the vanes more closely match the local flow conditions at a given point.

According to a third aspect of the disclosure there is provided an aerofoil formed by the process of the first or second aspect.

Optional features of the present disclosure will now be set out. These are applicable singly or in any combination with any aspect of the present disclosure.

The process may further include machining the front edge-receiving portion preparatory to bonding the leading edge piece thereto and/or machining the rear, edge-receiving portion preparatory to bonding the trailing edge piece thereto.

The leading edge piece and/or the trailing edge piece may be bonded to the respective edge-receiving portion by fusion welding or diffusion bonding.

The layered, planar pre-form, and the leading edge piece and/or the trailing edge piece may be formed of titanium alloy.

The aerofoil may be an outlet guide vane of a fan of a ducted fan gas turbine engine.

As noted elsewhere herein, the present disclosure may relate to a gas turbine engine. Such a gas turbine engine comprises an engine core comprising a turbine, a combustor, a compressor, and a core shaft connecting the turbine to the compressor. Such a gas turbine engine comprises a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a schematic, part-sectional side view of a gas turbine engine;
Figure 2 is a close up schematic, part-sectional side view of an upstream portion of a gas turbine engine;
Figure 3 is a partially cut-away axial view of a gearbox for a gas turbine engine;
Figures 4A to 4E schematically illustrate stages in a conventional superplastic inflating and hot creep forming process for forming an outlet guide vane; and
Figures 5A to 5F schematically illustrate stages in a process for forming an outlet guide vane according to the present disclosure.

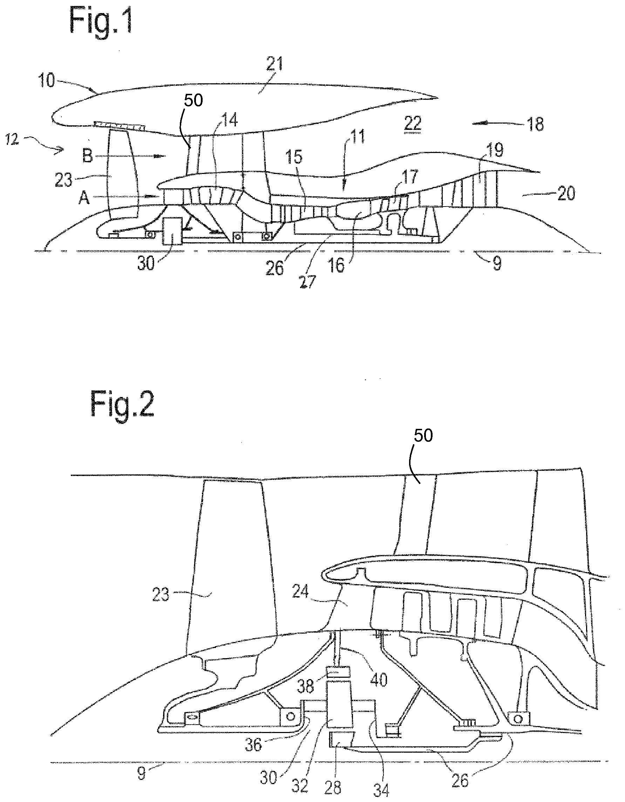

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22, containing fan OGVs 50. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

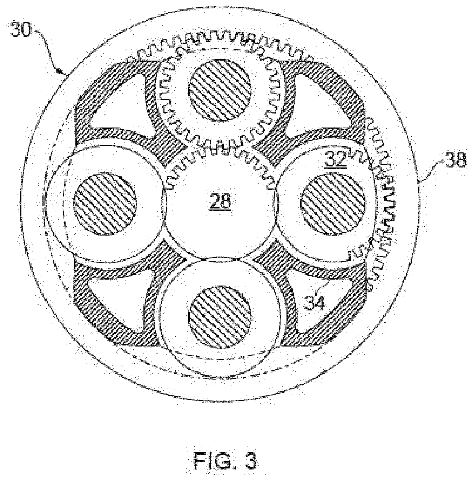

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

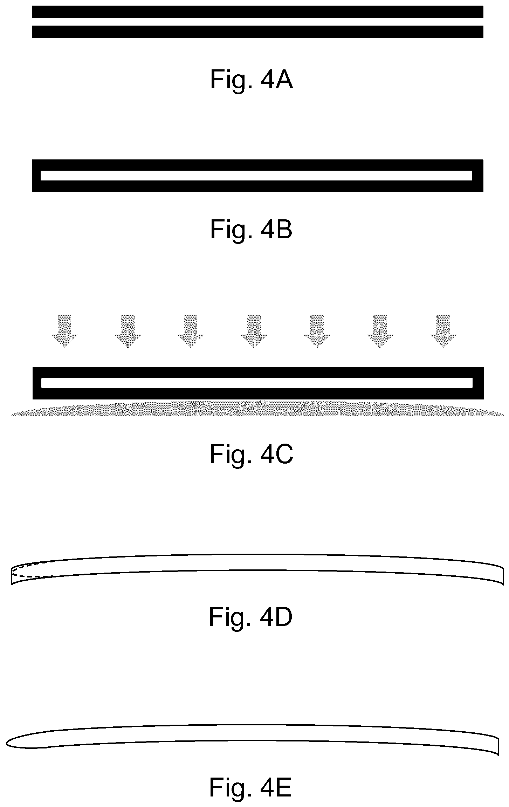

Figures 4A to 4E schematically illustrate stages in a conventional superplastic inflating and hot creep forming process for forming fan OGVs. In Figure 4A two flat titanium alloy plates are laid on top of each other. In Figure 4B, front and rear portions joining respectively front and rear edges of the plates are fused together, excess material may then be removed e.g. by waterjet cutting. In Figure 4C the fused plates are placed over a cambered former and subjected to SPF inflation and HCF in suitable pressing equipment to form an intermediate structure in which one of the plates provides an aerofoil pressure surface and the other an aerofoil suction surfaces. An elliptic leading edge (dashed line in Figure 4D) is then formed directly on the fused front edges of the plates by adaptive machining to complete the aerofoil shape of the OGV (Figure 4E). The aerofoil trailing edge may be similarly machined from the fused rear edges, or the fused rear edges of the intermediate structure may be in substantially final form after the SPF and HCF stage.

As previously mentioned however, this conventional process provides relatively poor control of vane inlet angle at the aerodynamically sensitive leading edge and, despite the machining stage, relies substantially on the cambered former and the pressing equipment for the shape of the leading edge such that modifications and variations to the vane are expensive to make.

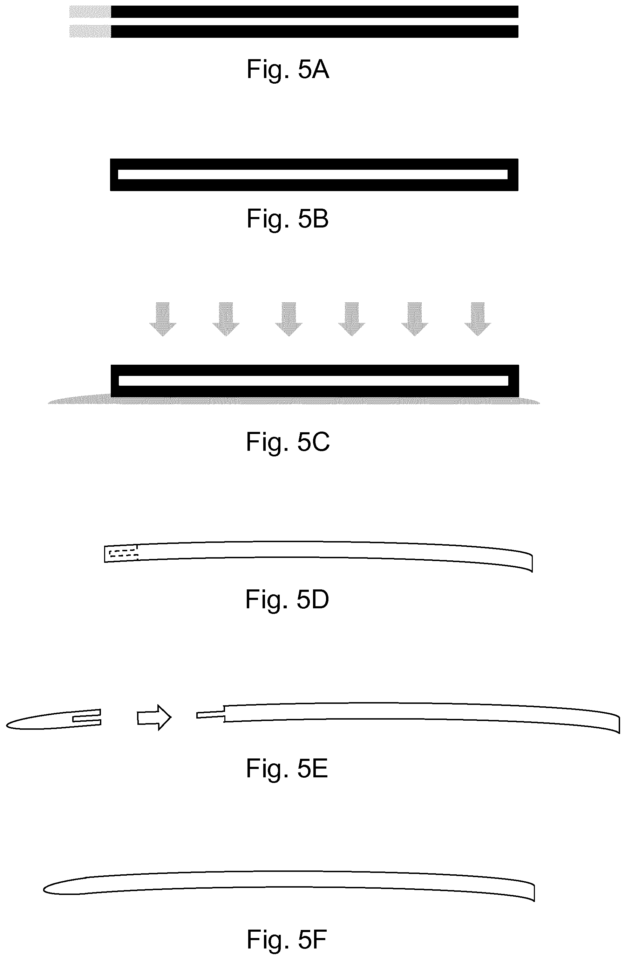

Accordingly, Figures 5A to 5F schematically illustrate stages in an improved process for forming the fan OGVs 50 of the engine of Figures 1 to 3. In this process, the OGVs are not solely manufactured using an SPF/HCF process with a machined leading edge ellipse. Instead the aerofoil is manufactured at a reduced chord (using SPF/HCF as before), but with an edge-receiving portion which can conveniently be machined into the front fused edges of the plates to receive a separate leading edge piece manufactured under a different process with greater accuracy than can be achieved by the adaptive machining of the conventional process.

Thus Figure 5A shows two flat titanium alloy plates laid on top of each other, but with reduced chordal length relative to the plates of Figure 4A. Similarly to the stages of Figures 4B and 4C, in Figure 5B, front and rear portions joining respectively front and rear edges of the plates are fused together, and in Figure 5C the fused plates are placed over a cambered former and subjected to SPF inflation and HCF in the pressing equipment to form an intermediate structure in which one of the plates provides an aerofoil pressure surface and the other an aerofoil suction surfaces. As shown in Figure 5D, a front edge-receiving portion (indicated by dashed lines) is then machined from the fused front edges of the plates. Referring to a Figure 5E, a separately manufactured leading edge piece is bonded to the front edge-receiving portion, e.g. by fusion welding or diffusion bonding. The finished OGV is shown in Figure 5F.

The greater accuracy and consistency of leading edge shape which this process provides can improve overall engine performance and reduce fuel burn. In addition, the leading edge may be more susceptible to in-service repair. A further advantage of the process is that it is relatively easy to change the shape of the leading edge, providing vane design flexibility without a need for expensive new camber standards. For example, complex geometric features can be relatively easily included at the leading edge, e.g. for noise mitigation.

Although described above in relation to shaping of the leading edge, the same approach (i.e. providing an edge-receiving portion and bonding a separately manufactured edge piece thereto) can applied to the trailing edge of the OGV. Also, although described above in relation to a fan OGV, the process can be applied to other aerofoil structures such as compressor stator vanes and compressor OGVs.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A process of forming an aerofoil, the process including:
providing a layered, planar pre-form;
inflating and hot creep forming the pre-form to form an intermediate structure having aerofoil pressure and suction surfaces, and a front, edge-receiving portion joining front edges of the pressure and suction surfaces;
providing a leading edge piece; and
bonding the leading edge piece to the front, edge-receiving portion of the intermediate structure to form an aerofoil in which the leading edge piece forms an aerofoil leading edge.

2. The process of forming an aerofoil according to Claim 1 which further includes:
machining the front edge-receiving portion preparatory to bonding the leading edge piece thereto.

3. The process of forming an aerofoil according to Claim 1 or Claim 2, wherein the intermediate structure from the hot creep forming and inflating further has an aerofoil trailing edge.

4. The process of forming an aerofoil according to Claim 1 or Claim 2, wherein the intermediate structure from the hot creep forming and inflating further has a rear, edge-receiving portion joining rear edges of the pressure and suction surfaces, and wherein the process further includes:
providing a trailing edge piece; and
bonding the trailing edge piece to the rear, edge-receiving portion of the intermediate structure to form an aerofoil in which the trailing edge piece forms an aerofoil trailing edge.

5. A process of forming an aerofoil, the process including:
providing a layered, planar pre-form;
inflating and hot creep forming the pre-form to form an intermediate structure having aerofoil pressure and suction surfaces, and a rear, edge-receiving portion joining rear edges of the pressure and suction surfaces;
providing a trailing edge piece; and
bonding the trailing edge piece to the rear, edge-receiving portion of the intermediate structure to form an aerofoil in which the trailing edge piece forms an aerofoil trailing edge.

6. The process of forming an aerofoil according to Claim 4 or Claim 5 which further includes:
machining the rear, edge-receiving portion preparatory to bonding the trailing edge piece thereto.

7. The process of forming an aerofoil according to Claim 5, wherein the intermediate structure from the hot creep forming and inflating further has an aerofoil leading edge.

8. The process of forming an aerofoil according to any one of the previous claims, wherein the leading edge piece and/or the trailing edge piece are bonded to the respective edge-receiving portion by fusion welding or diffusion bonding.

9. The process of forming an aerofoil according to any one of the previous claims, wherein the layered, planar pre-form, and the leading edge piece and/or the trailing edge piece are formed of titanium alloy.

10. The process of forming an aerofoil according to any one of the previous claims, wherein the aerofoil is an outlet guide vane of a fan of a ducted fan gas turbine engine.

11. An aerofoil formed by the process according to any one of the previous claims.

12. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft, wherein:
the engine has a row of aerofoils according to Claim 11.

13. The gas turbine engine according to Claim 12, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.
